# FASCICULE DE BREVET EUROPEEN

(11) **EP 1 949 025 B1**
(45) Date de publication et mention de la délivrance du brevet: **02.07.2014**
(21) Numéro de dépôt: 06807292.5
(22) Date de dépôt: 16.10.2006
(51) Int. Cl.: G01B 11/10

(54) **TRI DE PASTILLES PAR MESURE DU DIAMETRE**
SORTIEREN VON TABLETTEN DURCH MESSUNG DES DURCHMESSERS
SORTING TABLETS BY MEASURING DIAMETER

(30) Priorité: 18.10.2005 FR 0553154
(43) Date de publication de la demande: 30.07.2008
(73) Titulaire: Areva NC, 75009 Paris (FR)
(72) Inventeur: FERLET, Philippe, F-30150 Roquemaure (FR)
(74) Mandataire: Ahner, Philippe
(86) Numéro de dépôt international: PCT/EP2006/067434
(87) Numéro de publication internationale: WO 2007/045625

(56) Documents cités:
- DE-A1- 4 124 278
- FR-A- 2 835 604
- GB-A- 2 335 488
- US-A- 4 448 680

## Description

### DOMAINE TECHNIQUE

La présente invention se rapporte au contrôle de la taille d'objets cylindriques, et au tri qui en découle ; en particulier, l'invention concerne un procédé et un dispositif permettant, par la mesure du diamètre, d'évaluer en continu les dimensions d'un cylindre, et de commander un système d'éjection en fonction des résultats.

L'invention trouve notamment une application pour la vérification de la conformité de pastilles de combustible nucléaire avec les spécifications requises pour leur utilisation dans des crayons de combustible.

### ÉTAT DE LA TECHNIQUE ANTÉRIEURE

Lors de la fabrication de combustible nucléaire, décrite par exemple dans FR-A-2 825 307, des pastilles sont obtenues par un pressage de poudres comprenant du combustible suivi par un frittage à haute température, opération qui entraîne un retrait plus ou moins maîtrisé du matériau. Les pastilles frittées sont alors rectifiées afin d'obtenir un ajustement dimensionnel précis, compatible avec les critères exigés et permettant leur regroupement ultérieur dans des gaines pour former les crayons de combustible.

Il est ainsi usuel de vérifier, suite à la rectification, la conformité des dimensions des pastilles pour, suivant le résultat, soit les maintenir dans la ligne de production, soit les en éjecter.

A de nombreux stades de la production, un contrôle sélectif statistique des qualités du produit est effectué : des pastilles en cours de fabrication sont prélevées, et un contrôle de variables de l'échantillon permet la validation d'un groupe dont il est issu. Pour l'étape finale après rectification, au vu de la criticité du matériau concerné, il est cependant préférable de vérifier les dimensions de chaque pastille, ce qui allonge considérablement la durée du contrôle, étant donné que les mesures sont alors réalisées de façon discontinue après positionnement de chaque échantillon au niveau de l'appareillage de mesure.

Pour accélérer le processus et multiplier le nombre de contrôles, le document FR-A-2 699 836 présente le prélèvement simultané de plusieurs pastilles suivant des trajets parallèles et le contrôle de chaque groupe prélevé par l'intermédiaire d'un support tournant. La manipulation est cependant difficile, et impose un matériel lourd à mettre en oeuvre, tout en restant relativement lente.

Le document JP-A-9 285 765 décrit un contrôle de la longueur des pastilles effectué de façon semi continue : les pastilles sont amenées verticalement dans un système de contrôle de la hauteur d'un objet en mouvement, puis, en fonction des résultats, dirigées vers un endroit de stockage ou de rebut.

Bien que présentant l'avantage d'être plus rapide, le procédé décrit dans ce document ne vérifie cependant que la conformité de la longueur axiale des pastilles, sans contrôler leur diamètre, et oriente les pastilles non défectueuses vers un plateau de stockage immobile, depuis lequel elles doivent être reprises pour intégration dans le crayon. De plus, le moyen d'éjection est complexe à mettre en oeuvre, et le convoyage vertical n'est pas stable.

Le document DE 41 24 278 décrit la mesure successive de plusieurs paramètres, par des moyens distincts, également après individualisation des pastilles, ce qui n'est pas optimal au niveau vitesse de réalisation et coût des dispositifs de mesure.

DE 41 24 278 et US 4 448 680 décrivent des systèmes de tri connus.

### EXPOSÉ DE L'INVENTION

L'invention se propose de pallier ces inconvénients des dispositifs existants et, entre autres avantages, de s'affranchir des contraintes relatives aux contrôles actuellement en oeuvre.

En particulier, l'invention concerne un dispositif et un procédé de détermination continue des dimensions axiales d'objets cylindriques au cours de leur déplacement ; cette détermination peut être associée à la sélection des objets conformes, par exemple par éjection des autres. L'invention trouve une application particulière au contrôle de conformité de pastilles de combustible nucléaire rectifiées, et peut être mise en oeuvre dans un système de confinement du type boîte à gants.

Sous un de ses aspects, l'invention se rapporte à un procédé de vérification de la conformité d'objets cylindriques convoyés à vitesse contrôlée, constante, le long de leur axe, comprenant l'évaluation du diamètre des objets par interaction d'un faisceau, par exemple lumineux, perpendiculaire au sens de déplacement et renouvelée, les objets poursuivant leur déplacement pendant l'interaction de mesure. Les différents diamètres successifs de tranches de l'objet ainsi déterminés permettent alors un calcul du diamètre et de la longueur de l'objet, dimensions qui sont comparées à des seuils afin de vérifier leur conformité avec des critères requis. Avantageusement, cette vérification de la conformité est associée à une sélection permettant de ne retenir que les objets conformes.

Selon un mode de réalisation avantageux, la sélection est également automatisée et associée directement à la vérification de la conformité, en particulier par l'activation de moyens de tri en fonction des résultats de la vérification. L'activation peut notamment consister en l'ouverture d'une électrovanne permettant de souffler un gaz sur les objets non conformes pendant une durée déterminée.

Sous un autre aspect, l'invention concerne un système adapté à un tel procédé. En particulier, le dispositif de détermination et sélection comprend des moyens de convoyage linéaire, des moyens de détermination d'une dimension d'un objet convoyé perpendiculairement à la direction de convoyage, notamment un micromètre optique associé à des moyens de conversion du signal obtenu, et un système de tri en aval des moyens de détermination. Les moyens de détermination de la dimension sont associés à des moyens de stockage des données ainsi déterminées, et à des moyens de comparaison des données avec des seuils, les résultats des comparaisons permettant de commander le système de tri.

Le système de tri est de préférence une buse d'éjection de gaz sous pression associée à une électrovanne commandée par les moyens associés aux résultats des comparaisons. Avantageusement, les moyens de convoyage comprennent deux rives parallèles dont l'espacement est fixé, l'une des rives au moins étant aménagée au niveau de l'éjection.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1 montre une pastille pour laquelle le contrôle peut être appliqué.
La figure 2 illustre schématiquement l'étape de rectification et l'étape de contrôle et tri d'une pastille en cours de production.
La figure 3 montre un convoyeur à bande et à rive utilisé de préférence dans l'invention.
Les figures 4A et 4B illustrent la mesure et la détermination du diamètre.
Les figures 5A et 5B montrent divers aspects du convoyage au niveau de l'éjection.
La figure 6 est un diagramme reprenant les étapes du procédé de tri.

### EXPOSÉ DÉTAILLÉ DE MODES DE RÉALISATION PARTICULIERS

Le contrôle et le tri selon l'invention ont de.préférence lieu en fin de procédé de fabrication de pastilles de combustible nucléaire. Cette application particulière engendre des contraintes supplémentaires inhérentes au matériau des objets à trier : les pastilles de combustible nucléaire sont, tout au long de leur procédé de fabrication, manipulées dans une enceinte étanche, ou boîte à gants, comprenant une pluralité de modules pour chaque étape reliés entre eux par des systèmes de sas, les pastilles étant déplacées par des convoyeurs. Ce mode de réalisation n'est cependant qu'illustratif, et il est possible d'utiliser le procédé et le dispositif selon l'invention en amont de cette étape, ou sur d'autres échantillons cylindriques convoyés de façon continue.

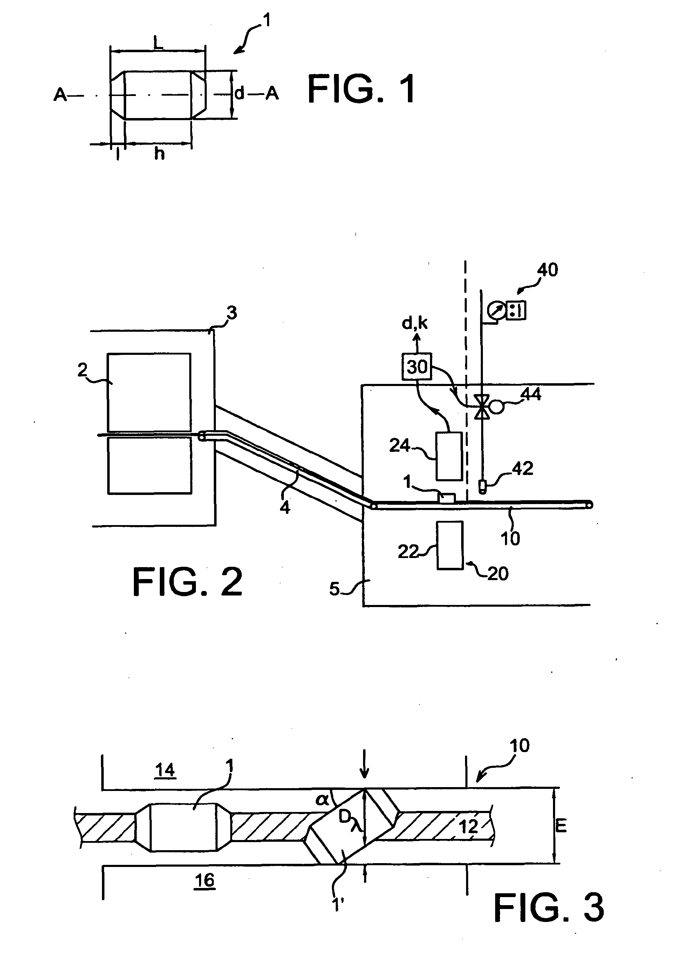

Un exemple d'application particulier sera décrit pour des pastilles, par exemple de type MOX comprenant un mélange de PuO₂ et UO₂, dont la forme est schématisée en figure 1 : les pastilles 1 sont généralement cylindriques d'axe AA, de diamètre d compris entre 8 et 10,5 mm et de longueur L comprise entre 9,5 et 14,0 mm, présentent un chanfrein de longueur axiale 1 comprise entre 0,05 et 0,5 mm aux extrémités. Les critères de conformité sont classiquement de quelques dizaines de micromètres pour le diamètre d et quelques dixièmes de millimètres pour les longueurs L, h.

Tel qu'illustré sur la figure 2, après rectification par une meule 2, les pastilles frittées de combustible 1 sont transportées de l'enceinte de rectification 3, de préférence par un convoyeur 4 à doubles tores et horizontalement, vers une enceinte 5 de contrôle et tri ; la position horizontale, c'est-à-dire le long de son axe AA, ou « couchée », de la pastille 1 est la plus stable, et donc le convoyage est moins sujet à des blocages et/ou incidents.

Bien que ce ne soit pas nécessaire, il est préférable de procéder à un changement de convoyeur 4 avant la mesure : en effet, ceci permet, par adaptation des vitesses relatives, d'espacer les pastilles 1, et de leur imprimer une vitesse particulièrement étudiée pour le système de contrôle.

La conformité dimensionnelle des pastilles 1 est, selon l'invention, mesurée par un contrôle continu, ou semi continu, d'une dimension de la pastille 1 perpendiculairement à son sens de déplacement : le micromètre mesure le diamètre d d'une pastille 1 couchée sur le convoyeur 10.

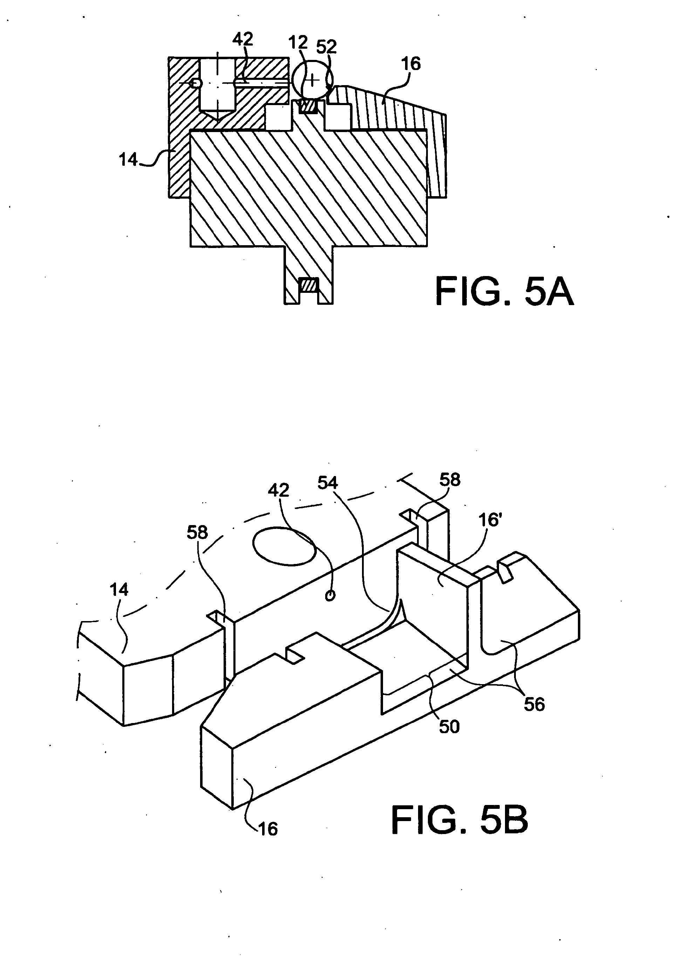

Il apparaît ainsi indiqué que le convoyeur 10 de pastilles 1 pour les étapes de mesure et tri soit de préférence du type « à rives » illustré en figure 3 (voir aussi figures 5), c'est-à-dire que les pastilles 1 circulent sur une bande 12 entre deux rives 14, 16 dont l'espacement E est calibré pour assurer une orientation correcte des pastilles 1 au long de leur déplacement. En particulier, au niveau de la mesure (flèche), l'écartement E entre les rives 14, 16 permet également de déterminer la marge d'erreur dans la détermination D_{λ} du diamètre d inhérente à un éventuel désaxage de la pastille 1. D'autre part, l'utilisation d'un convoyeur à bande permet d'avoir une interface simple avec le convoyeur amont à tores et, du fait de sa très faible largeur, il autorise la mesure de pastilles de faible diamètre. Ainsi, dans l'exemple de réalisation préféré, l'espacement E des rives est tel qu'il garantit un écart maximum δ de 3 µm sur la mesure D_{λ} du diamètre d dans le cas où la pastille 1' serait complètement de travers.

Le convoyeur à rives 10 amène ainsi les pastilles 1 au niveau d'un détecteur de diamètre 20, de préférence optique ; les rives 14, 16 sont adaptées pour le passage du faisceau de mesure. Le diamètre est mesuré selon une seule génératrice, par exemple verticale. De préférence, les moyens 20 de détection du diamètre comprennent un micromètre optique couplé à des moyens de calcul et stockage de données ; avantageusement, le micromètre est de type à diode électroluminescente (LED) et. caméra CCD (« Charge Coupled Device ») linéaire à grande vitesse, comme un micromètre Keyence™ ; notamment, le micromètre LS 7000 offre une fréquence élevée de mesures, une longue durée de vie, une faible sensibilité à l'empoussièrement, tout en garantissant précision, fidélité et reproductibilité des mesures de pièces en mouvement.

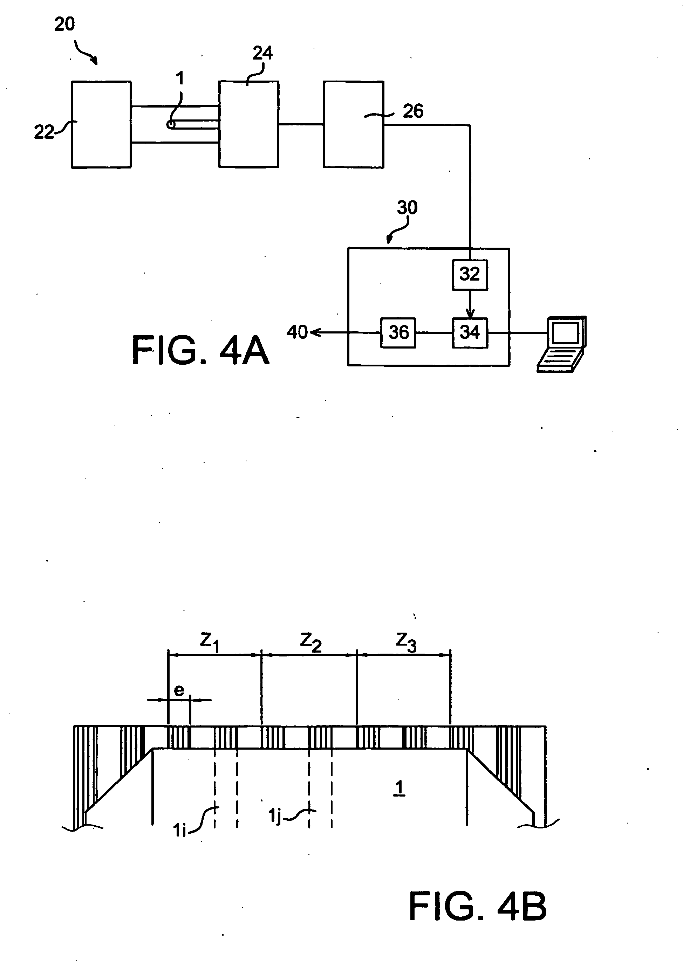

Plus précisément, tel qu'illustré en figure 4A, un micromètre 20 de détection d'une dimension d'un objet défilant comprend un émetteur 22 et un système récepteur 24 de l'image fantôme de la pastille 1. Il est en outre avantageux de prévoir un dispositif permettant de souffler de façon permanente du gaz, notamment de l'azote, sur la vitre du système, émetteur 22 ou récepteur 24, situé sous le convoyeur 10 afin d'empêcher le dépôt sur la vitre de poussières qui pourraient perturber la mesure. Ce soufflage peut être assuré par exemple par un capotage qui s'adapte sur la vitre concernée et permet à la fois d'orienter le flux de gaz vers la vitre et de limiter le faisceau de lumière à une zone de mesure utile réduite ; en outre, la face supérieure du capotage est de préférence inclinée afin de garantir qu'aucune pastille tombée de la ligne de convoyage ne reste sur la fente et perturbe la mesure.

Le système 20 permet une mesure quasi instantanée du diamètre d ; un contrôleur 26 associé au micromètre 20 détermine régulièrement la moyenne D_{λ} des mesures précédentes, moyenne transmise ensuite à une unité de commande 30 à intervalles prédéterminés : le diamètre D_{λ} alors reçu par l'unité de commande et de contrôle 30 concerne une tranche 1ᵢ de pastille d'épaisseur e (figure 4B). En raison des différentes durées de calculs et de transmission, usuellement, le diamètre D_{λ} transmis et stocké dans des moyens de stockage 32 de l'unité 30 concerne des tranches 1ᵢ non contiguës ; suivant la vitesse de défilement et les paramètres choisis pour les périodes de transmission, les moyennes D_{λ} sont effectuées sur un nombre variable de mesures, et pour chaque pastille 1, un nombre k de mesures de tranches 1ᵢ est stocké.

Le diamètre D_{λ} ainsi déterminé et stocké dans la mémoire 32 est alors transmis à des moyens 34 permettant la vérification de différents paramètres. En particulier, le diamètre D_{λ} est comparé à des seuils de tolérance ; de plus, suivant le nombre k de tranches ainsi vérifiées et en connaissant la vitesse de défilement, qui est constante, il est possible de déterminer si la longueur L de la pastille 1 remplit les critères requis ou non. Avantageusement, les irrégularités de forme peuvent également être détectées : les tranches 1ᵢ peuvent être regroupées en plusieurs groupes, notamment trois, Z₁, Z₂, Z₃, pour lesquels une mesure de la moyenne d_{z} du diamètre D_{λ} est calculée, afin de comparer chaque moyenne aux seuils et de vérifier l'uniformité de ces moyennes. Les différents paramètres sont ainsi mesurés par l'intermédiaire de la détermination d'une seule dimension D_{λ}, par l'interaction d'un seul faisceau, ce qui réduit les coûts et la complexité du système, en particulier au sein'de l'environnement confiné 5.

L'unité de contrôle et de commande 30, habituellement un microordinateur, comprend par ailleurs avantageusement des moyens d'activation 36 d'un dispositif d'éjection 40 des pastilles 1 pour lesquelles un verdict de non-conformité est établi. En particulier, l'éjection est faite par soufflage de gaz, avantageusement de l'azote, via une buse 42 dans une direction normale à l'avancement des pastilles 1 ; la buse 42 est agencée directement dans une des rives 14 du convoyeur 10. La détection de pastilles 1 non conformes (diamètre, longueur, ou forme) entraîne l'activation d'une électrovanne 44 permettant le passage de gaz sous pression et dirigeant les pastilles 1 concernées hors du convoyeur 10, vers le rebut, alors que les autres poursuivent leur déplacement vers une étape suivante.

La pression et la durée d'éjection sont choisies en fonction de la distance entre le faisceau de mesure et la buse, la vitesse nominale de défilement, et la longueur des pastilles, de façon à permettre la mise au rebut d'une seule pastille 1 à coup sûr, c'est-à-dire pour éjecter les pastilles hors tolérances avec une efficacité de 100 %, mais seulement elles. La pression d'éjection minimale est de l'ordre de 3 à 4 bars ; par exemple, pour une plage de vitesse de fonctionnement de l'ordre de 65 ± 10 mm/s et des pastilles de longueur d'environ 11,5 mm, de diamètre d'environ 8,2 mm et pesant environ 6,5 g qui défilent couchées, la pression de fonctionnement a été choisie au-delà de cette limite, proche de 6 bars.

A cette fin, tel qu'illustré en figures 5, la rive 16 opposée à la buse 42 est adaptée pour guider les pastilles, y compris les pastilles debout, jusqu'à la buse d'éjection 42, pour permettre le passage des pastilles soufflées au dessus de la rive 16, pour empêcher les pastilles non conformes de pouvoir revenir sur le convoyeur 12 en cas de rebond lors du soufflage, et pour réengager les autres, conformes aux spécifications, entre des rives calibrées. En particulier, la rive 16 est abaissée localement en dessous de l'axe des pastilles sur une fenêtre d'éjection 50 d'environ 15 mm de longueur en amont et en aval de la buse d'éjection 42 ; un plan incliné 52 permet, lors du soufflage, de faire « décoller » les pastilles du convoyeur 12. La remontée de la rive 16 en sortie de fenêtre d'éjection 50 est particulièrement usinée 54 pour pouvoir guider progressivement les pastilles conformes qui se seraient déplacées latéralement dans la fenêtre 50 (plus large) et les réengager dans la rive 16' rehaussée. Par ailleurs, pour éviter un rebond des pastilles, un plan incliné 56 peut être prévu.

D'autre part, afin de ne pas devoir paramétrer la position du faisceau par rapport au convoyeur 10, il est souhaitable que le support du micromètre 20 et le convoyeur 10 soient solidaires, avec par exemple présence d'un aménagement 58 dans les rives pour le passage de faisceau. De même, la position de la buse d'éjection 42 est intégrée dans la rive calibrée 14 ne contenant pas la fenêtre d'éjection 50. Dans cette configuration, en dehors du changement d'une pièce, la seule cote qui peut évoluer suite à un démontage/remontage ou à l'usure par frottement est l'espacement E entre les rives calibrées 14, 16. Un calibre « passe-bas » constitué d'une pastille étalon montée sur un support peut être utilisé pour le vérifier, par exemple au moins une fois par semaine en configuration industrielle et après tout démontage et remontage des rives calibrées. De façon générale, la rive 14 comprenant les moyens d'éjection 40 et de détermination 20 est considérée comme fixe, et l'autre rive 16 peut être déplacée par rapport à elle pour ajuster l'espacement E.

Le convoyeur 10 peut être muni d'autres moyens en aval de l'éjection permettant une deuxième détermination du diamètre, par exemple un micromètre similaire au premier, afin de contrôler la qualité du tri précédent.

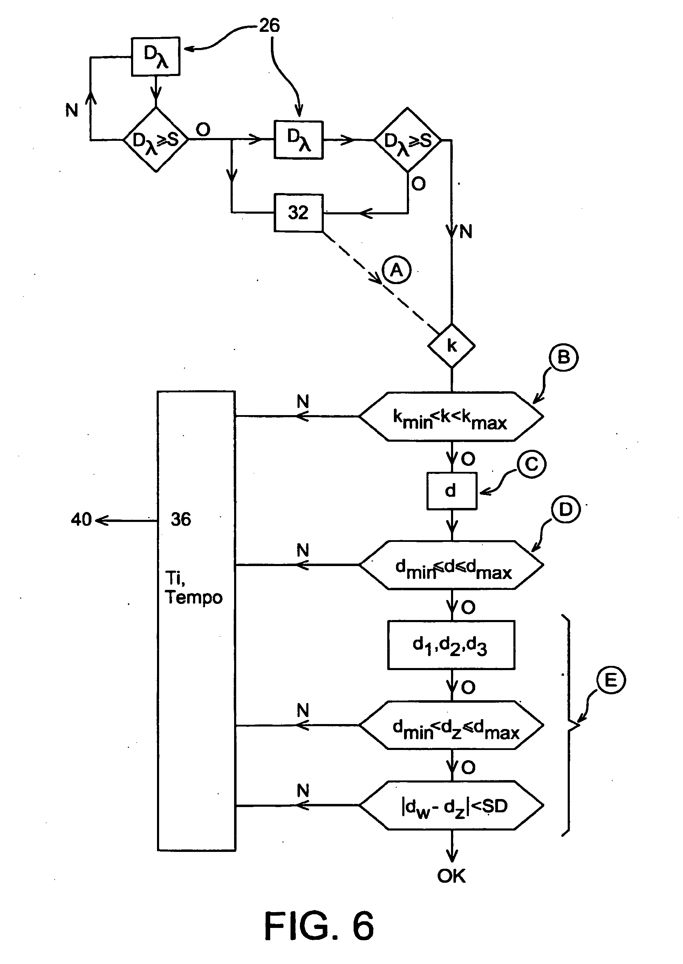

Plus spécifiquement, un procédé de détermination et de tri selon l'invention peut reprendre les étapes schématisées en figure 6.

Dans un premier temps, le diamètre D_{λ} transmis par les moyens de détermination 26 à partir de la mesure par le micromètre 20 est comparé à un seuil S afin de déterminer si une pastille 1 est en train de passer sous le faisceau 20.

Lorsque le seuil S n'est plus atteint, on considère que la pastille 1 est entièrement passée, et le procédé de contrôle en tant que tel peut démarrer.

Dans une première étape A, le nombre k de tranches collectées pour la pastille 1, c'est-à-dire le nombre de valeurs D_{λ} stockées tant que le diamètre déterminé D_{λ} dépassait le seuil S, est calculé.

Dans une deuxième étape B, ce nombre de tranches k est comparé à deux valeurs maximales et minimales d'acquisition de tranches au cours d'un passage de pastille 1, afin d'évaluer si la longueur L de la pastille 1 remplit des critères prédéfinis : si k > kₘₐₓ, on considère qu'il s'agit de pastilles trop longues, ou jointives, et elles sont éjectées ; inversement, si k < kₘᵢₙ, on considère la pastille trop courte et elle est éjectée.

Il est à noter que cette fonctionnalité a de fait pour principal avantage qu'elle permet de rebuter les pastilles ou bouts de pastilles qui pourraient bloquer la transitique en aval du tri. En particulier, si une pastille, même tout à fait conforme, défile « debout », c'est-à-dire que son axe AA est perpendiculaire à la direction de déplacement, ce qui risque d'occasionner des blocages au vu de l'instabilité de la position, elle est détectée comme ayant une longueur trop courte, et éjectée. De même, si des pastilles sont collées l'une à l'autre, de sorte que la détection de l'espace entre elles n'est pas possible, les pastilles concernées seront éjectées (car trop longues) : à part la perte de pastilles éventuellement valables, une telle formation n'entache pas la fiabilité du tri et ne maintient pas de « faux positifs ». Les seuils kₘᵢₙ et kₘₐₓ sont fixés de façon à assurer l'éjection d'une pastille juste inférieure à la longueur minimale défilant à la vitesse maximale et l'éjection de deux pastilles jointives (de longueur résultante juste supérieure à la longueur maximale).

Dans une troisième étape C, une sélection des tranches intéressantes de la pastille 1, considérée comme conforme aux spécifications de longueur L, est effectuée. En effet, pour le calcul du diamètre d, il convient d'ignorer les deux extrémités comprenant un chanfrein, pour lesquelles le diamètre est non représentatif ; également, il est préférable de ne pas effectuer le tri sur la base d'une mesure trop proche de cette zone d'extrémité.

A cette fin, sur le nombre k de valeurs D_{λ} stockées, on ignore kᵢ et k_{f} tranches respectivement en début et fin d'acquisition ; kᵢ et k_{f} sont déterminés en fonction de la vitesse de défilement retenue, de la longueur minimale que l'on veut ignorer en début et fin de pastille et du nombre de valeurs moyennées par diamètre D_{λ}. Par exemple, pour une vitesse de défilement proche de 65 mm/s et 16 mesures moyennées par les moyens 26 avant de transmettre D_{λ}, pour ignorer 1,2 mm en début et fin de chaque pastille, on fixe kᵢ = k_{f} = 3 tranches.

Le diamètre d de la pastille 1 est alors calculé comme étant la moyenne des mesures D_{λ} sur les (k - kᵢ - k_{f}) tranches utiles.

La conformité de la pastille 1 au niveau de son diamètre d est déterminée dans une quatrième étape D par comparaison du diamètre calculé d avec deux seuils dₘₐₓ maximum et dₘᵢₙ minimum acceptables, respectivement fixés à environ 10 µm du diamètre nominal.

Il est possible aussi, au cours d'une cinquième étape E, de calculer le diamètre par zone de pastille. En particulier, on détermine le nombre de tranches concernées par les zones de début, centre et fin Z₁, Z₂ et Z₃ de pastille 1, et le diamètre d₁, d₂ et d₃ est déterminé pour chacune. Chacune de ces valeurs est de même comparée aux seuils dₘₐₓ maximum et d0ₘᵢₙ minimum ; de plus, les écarts |d₁ - d₂|, |d₂ - d₃| et |d₁ - d₃| sont comparés à un seuil SD au-delà duquel le défaut de forme est considéré comme inacceptable.

Si la pastille 1 est considérée comme conforme, elle poursuit son déplacement sur le convoyeur 10. Si, à l'une quelconque des étapes B, D et E, la pastille est détectée comme non conforme, les moyens de commande 36 déclenchent l'électrovanne 44 et l'éjection de la pastille 1.

Le temps d'impulsion nécessaire est validé par essais, et dépend de la longueur des pièces à éjecter, de leur vitesse de défilement et de leur masse. En particulier, il s'avère qu'une durée d'ouverture de la vanne d'éjection 44 de l'ordre de Tᵢ = 0,09 s est appropriée pour une pastille de 6,4 g de longueur nominale L = 11,5 mm, à la vitesse de 65 mm/s ; cette durée de soufflage correspondant à une longueur de 6 mm. Par ailleurs, la buse 42 étant écartée du laser de détermination 20, écartement qui peut être optimisé par ailleurs, et la pastille 1 se déplaçant, une temporisation Tempo entre la détermination de la non-conformité et l'actionnement est nécessaire, par exemple de 0,20 s pour un écartement entre faisceau 20 et buse 42 de 26 mm.

Le système de détermination et tri selon l'invention a été vérifié et qualifié pour un procédé de fabrication industriel ; en particulier, de nombreux moyens sont intégrés pour détecter les éventuels erreurs et/ou incidents. Des tests en configuration industrielle ont ainsi montré l'éjection de toutes les pastilles hors norme.

## Revendications

1. Procédé de vérification de la conformité dimensionnelle d'objets cylindriques (1) comprenant :
- le déplacement à vitesse prédéterminée des objets (1) dans une direction parallèle à leur axe (AA) ;
- l'interaction d'un faisceau avec l'objet (1) perpendiculairement à sa direction de déplacement ;
- la détermination du diamètre (D_{λ}) d'une pluralité de tranches (1ᵢ) de l'objet (1) grâce au signal représentatif de l'interaction dudit faisceau ;
- le calcul d'un diamètre (d) représentatif de l'objet (1) sur la base des diamètres déterminés (D_{λ}) des tranches (1ᵢ) ;
- le calcul d'une caractéristique (k) représentative de la longueur (L) de l'objet (1) sur la base du nombre (k) de tranches (1ᵢ) pour lesquelles le diamètre (D_{λ}) a été déterminé ;
- la comparaison du diamètre (d) et de la longueur (L) calculés avec des seuils (dₘᵢₙ, dₘₐₓ, kₘᵢₙ, kₘₐₓ) permettant de vérifier la conformité de l'objet (1).

2. Procédé selon la revendication 1 comprenant ensuite une sélection des objets (1) en fonction de leur conformité.

3. Procédé selon la revendication 2 comprenant l'activation de moyens de tri (40) en fonction des comparaisons des diamètre et longueur (d, L) afin d'assurer la sélection.

4. Procédé selon la revendication 3 dans lequel l'activation de moyens de tri (40) comprend l'ouverture d'une électrovanne (44) pendant une durée déterminée (Tᵢ), et la sélection est assurée par un gaz de soufflage passant par l'électrovanne (44).

5. Procédé selon l'une des revendications 1 à 4 appliqué à des pastilles de combustible nucléaire.

6. Dispositif de détermination de la conformité de pastilles (1) comprenant :
- des moyens de convoyage linéaire (10) des pastilles;
- un système de détermination (20) d'une pluralité de valeurs d'une seule dimension (D_{λ}) perpendiculaire à la direction de convoyage et pendant le convoyage ;
- des moyens de stockage (32) desdites valeurs déterminées (D_{λ}) ;
- des moyens pour calculer (34) des valeurs représentatives de la longueur et du diamètre de la pastille (1) grâce à la pluralité desdites valeurs stockées (D_{λ}) et pour comparer les valeurs à des seuils ;
- un système de tri (40) en aval du système de détermination (20) associé aux moyens de convoyage (10) ;
- des moyens (36) pour activer le système de tri (40) par l'intermédiaire des résultats des comparaisons par les moyens pour comparer (34).

7. Dispositif selon la revendication 6 dans lequel les moyens pour calculer (34) comprennent des moyens pour faire la moyenne d'un certain nombre desdites valeurs stockées (D_{λ}).

8. Dispositif selon l'une des revendications 6 à 7 dans lequel le système de tri (40) est une buse (42) d'éjection de gaz sous pression perpendiculaire au convoyage.

9. Dispositif selon la revendication 8 comprenant une électrovanne (44) connectée à la buse d'éjection (42) et commandée par les moyens (36) pour activer le système de tri (40).

10. Dispositif selon l'une des revendications 8 ou 9 dans lequel les moyens de convoyage (10) comprennent deux rives (14, 16) parallèles le long de la direction de convoyage, l'une des rives (16) au moins étant aménagée au niveau de la buse d'éjection (42).

11. Dispositif selon l'une des revendications 6 à 10 dans lequel le système de détermination comprend un micromètre laser (20).

12. Dispositif selon l'une des revendications 6 à 11, associé à un système de confinement du type boîte à gants.

## Patentansprüche

1. Verfahren zur Überprüfung der dimensionalen Gleichförmigkeit von zylindrischen Objekten (1), wobei das Verfahren die folgenden Schritte umfasst:
- die Bewegung der Objekte (1) in einer vorbestimmten Geschwindigkeit in eine Richtung parallel zu deren Achse (AA);
- die Wechselwirkung eines Strahls mit dem Gegenstand (1) senkrecht zu dessen Bewegungsrichtung;
- die Bestimmung des Durchmessers (D_{I}) einer Vielzahl von Teilabschnitten bzw. Scheiben (Iᵢ) des Objekts (1) dank eines Signals, welches die Wechselwirkung des Strahls anzeigt;
- die Berechnung eines Durchmessers (d), welcher das Objekt (1) auf der Basis der bestimmten Durchmesser (D_{I}) der Teilabschnitte bzw. Scheiben (Iᵢ) darstellt;
- die Berechnung eines Merkmals (k), welches die Länge (L) des Objekts (1) auf Basis der Anzahl (k) an Teilabschnitten bzw. Scheiben (Iₗ) anzeigt, für welche der Durchmesser (D_{I}) bestimmt worden ist;
- der Vergleich des Durchmessers (d) und der Länge (L), welche mit Hilfe von Grenzwerten (dₘᵢₙ, dₘₐₓ, kₘᵢₙ, kₘₐₓ) berechnet werden, wodurch die Gleichförmigkeit des Objekts (1) überprüft werden kann.

2. Verfahren nach Anspruch 1, welches anschließend eine Auswahl der Objekte (1) in Abhängigkeit von deren Gleichförmigkeit aufweist.

3. Verfahren nach Anspruch 2, welches die Aktivierung einer Sortiereinrichtung (40) in Abhängigkeit von den Vergleichen von Durchmesser und Länge (d, L) aufweist, um die Auswahl sicherzustellen.

4. Verfahren nach Anspruch 3, bei welchem die Aktivierung der Sortiereinrichtung (40) die Öffnung eines Magnetventils (44) während einer bestimmten Zeitdauer (Tᵢ) umfasst, und die Auswahl durch ein Hilfsgas gewährleistet wird, welches durch das Magnetventil (44) fließt.

5. Verfahren nach einem der Ansprüche 1 bis 4, welches bei Kernbrennstofftabletten angewendet wird.

6. Vorrichtung zur Bestimmung der Gleichförmigkeit von Tabletten (1), welche Folgendes aufweist:
eine lineare Transporteinrichtung (10) für die Tabletten;
ein System (20) zur Bestimmung einer Vielzahl von Werten einer einzigen Dimension (D_{I}) senkrecht zur Transportrichtung und während des Transports;
eine Speichereinrichung (32) dieser bestimmten Werte (D_{I});
eine Einrichtung zur Berechnung (34) von Werten, welche die Länge und den Durchmesser der Tablette (1) dank der Vielzahl der gespeicherten Werte (D_{I}) darstellen, sowie zum Vergleich der Werte mit Grenzwerten;
ein Sortiersystem (40) unterhalb des Systems (20) zur Bestimmung, welches mit der Transporteinrichtung (10) verbunden ist;
eine Einrichtung (36) zur Aktivierung des Sortiersystems (40) mit Hilfe von Vergleichsergebnissen von der Vergleichseinrichtung (34).

7. Vorrichtung nach Anspruch 6, in welcher die Einrichtung zur Berechnung (34) eine Einrichtung zur Mittelwertbildung einer gewissen Anzahl der gespeicherten Werte (D_{I}) umfasst.

8. Vorrichtung nach einem der Ansprüche 6 bis 7, in welcher das Sortiersystem (40) ein Ausgabedüse (42) für Druckgas senkrecht zum Transport ist.

9. Vorrichtung nach Anspruch 8, welche ein Magnetventil (44) umfasst, welches mit der Ausgabedüse (42) verbunden ist und von der Einrichtung (36) gesteuert wird, um das Sortiersystem (40) zu steuern.

10. Vorrichtung nach einem der Ansprüche 8 oder 9, in welcher die Transporteinrichtung (10) zwei Ränder bzw. Begrenzungen (14, 16) parallel entlang der Transportrichtung umfasst, wobei zumindest einer der Ränder (16) auf Höhe der Ausgabedüse (42) angeordnet ist.

11. Vorrichtung nach einem der Ansprüche 6 bis 10, in welcher das System zur Bestimmung einen Lasermikrometer (20) umfasst.

12. Vorrichtung nach einem der Ansprüche 6 bis 11, welches mit einem Behältersystem von der Art eines Handschuhfachs verbunden ist.

## Claims

1. A method for checking dimensional compliance of cylindrical objects (1) comprising:
- displacement at a predetermined velocity of the objects (1) in a direction parallel to their axis (AA);
- interaction of a beam with the object (1) perpendicularly to its displacement direction;
- determination of the diameter (D_{λ}) of a plurality of sections (1ᵢ) of the object (1) by means of the signal representative of the interaction of said beam;
- computation of a diameter (d) representative of the object (1) on the basis of the determined diameters (D_{λ}) of the sections (1ᵢ) ;
- computation of a characteristic (k) representative of the length (L) of the object (1) on the basis of the number (k) of sections (1ᵢ) for which the diameter (D_{λ}) was determined;
- comparison of the computed diameter (d) and length (L) with thresholds (dₘᵢₙ, dₘₐₓ, kₘᵢₙ, kₘₐₓ) with which the compliance of the object (1) may be checked.

2. The method according to claim 1, next comprising a selection of objects (1) depending on their compliance.

3. The method according to claim 2, comprising the actuation of sorting means (40) depending on the comparisons of the diameter and length (d, L) in order to provide selection.

4. The method according to claim 3, wherein the actuation of the sorting means (40) comprises the opening of a solenoid valve (44) for a determined time (Tᵢ), and selection is provided by a blowing gas passing through the solenoid valve (44).

5. The method according to any of claims 1 to 4, applied to nuclear fuel pellets.

6. A device for determining compliance of pellets (1) comprising:
- linear conveying means (10) of the pellets;
- a system for determination (20) of a plurality of values of a single dimension (D_{λ}) perpendicular to the conveying direction and during the conveying;
- means (32) for storing said determined values (D_{λ}) ;
- means (34) for computing representative values of the length and diameter of the pellet (1) by means of the plurality of said stored values (D_{λ}) and for comparing the values with thresholds;
- a sorting system (40) downstream from the determination system (20) associated with the conveying means (10);
- means (36) for actuating the sorting system (40) via the results of the comparisons by the comparing means (34).

7. The device according to claim 6, wherein the computing means (34) comprise means for averaging a certain number of said stored values (D_{λ}).

8. The device according to any of claims 6 or 7, wherein the sorting system (40) is a pressurized gas ejection nozzle (42) perpendicular to the conveyor.

9. The device according to claim 8, comprising a solenoid valve (44) connected to the ejection nozzle (42) and controlled by the means (36) for actuating the sorting system (40).

10. The device according to claim 8 or 9, wherein the conveying means (10) comprise two parallel edges (14, 16) along the conveying direction, one of the edges (16) being at least arranged at the ejection nozzle (42).

11. The device according to any of claims 6 to 10, wherein the determination system comprises a laser micrometer (20).

12. The device according to any of claims 6 to 11, associated with a confinement system of the glove box type.
